# FASCICULE DE BREVET EUROPEEN

(11) **EP 3 792 759 B1**
(45) Date de publication et mention de la délivrance du brevet: **07.08.2024**
(21) Numéro de dépôt: 20195070.6
(22) Date de dépôt: 08.09.2020
(51) Int. Cl.: G06F 9/50, G06F 9/52

(54) **PROCÉDÉ D'ACCÈS AUX RESSOURCES PARTAGÉES D'UNE PLATEFORME INFORMATIQUE, PROGRAMME D'ORDINATEUR ET PLATE-FORME INFORMATIQUE ASSOCIÉS**
VERFAHREN FÜR DEN ZUGANG ZU AUFGETEILTEN RESSOURCEN EINER IT-PLATTFORM, ENTSPRECHENDES COMPUTERPROGRAMM UND ENTSPRECHENDE IT-PLATTFORM
METHOD FOR ACCESSING SHARED RESOURCES OF A COMPUTER PLATFORM, ASSOCIATED COMPUTER PROGRAM AND COMPUTER PLATFORM

(30) Priorité: 12.09.2019 FR 1910049
(43) Date de publication de la demande: 17.03.2021
(73) Titulaire: THALES, 92400 Courbevoie (FR)
(72) Inventeur: SANDERSON, Gordon, 33700 MERIGNAC (FR); FINE, ALEXANDRE, 33700 MERIGNAC (FR)
(74) Mandataire: Lavoix

(56) Documents cités:
- FR-A1- 2 970 577
- US-A1- 2005 240 932
- BRUNO GOMES ET AL: "AIR HYPERVISOR USING RTEMS SMP", EUROPEAN WORKSHOP ON ON-BOARD DATA PROCESSING (OBDP2019), 25 February 2019 (2019-02-25), pages 1 - 6, XP055718863, Retrieved from the Internet <URL:https://indico.esa.int/event/225/contributions/4307/attachments/3343/5387/OBDP2019-paper-GMV_Gomes_AIR_Hypervisor_using_RTEMS_SMP.pdf> [retrieved on 20200729]
- KINNAN L ET AL: "Porting applications to an ARINC 653 compliant IMA platform using Vxworks as an example", DIGITAL AVIONICS SYSTEMS CONFERENCE, 2004. DASC 04. THE 23RD SALT LAKE CITY, UT, USA 24-28 OCT. 2004, PISCATAWAY, NJ, USA,IEEE, US, 24 October 2004 (2004-10-24), pages 10.B.1-1 - 10.B.1-8, XP010765111, ISBN: 978-0-7803-8539-9
- K.M. MALLACHIEV ET AL: "Design and architecture of real-time operating system", PROCEEDINGS OF THE INSTITUTE FOR SYSTEM PROGRAMMING OF THE RAS, vol. 28, no. 2, 1 January 2016 (2016-01-01), pages 181 - 192, XP055718994, ISSN: 2079-8156, DOI: 10.15514/ISPRAS-2016-28(2)-12

## Description

L'invention concerne le domaine des plateformes applicatives comportant des processeurs multi-coeurs, telles que des plates-formes avioniques embarquées, en particulier de la maîtrise du fonctionnement des applications logicielles exécutées sur de telles plateformes permettant leur certification par exemple de type Safety Net.

En particulier, l'invention est relative à un procédé d'accès aux ressources partagées d'une plateforme informatique) comprenant :
- au moins un processeur multicoeurs comprenant au moins deux coeurs ;
- un ensemble de partitions applicatives exécutables sur le processeur ;
- un ensemble de ressource(s) partagée(s) entre lesdites partitions applicatives ;
   selon lequel l'ensemble des partitions applicatives comprend des premières partitions générant des requêtes d'accès à au moins une ressource partagée de l'ensemble de ressource(s) partagée(s), transmettant des données numériques à écrire dans ladite ressource partagée ou interrogeant ladite ressource partagée ;
   l'utilisation des coeurs par les partitions applicatives étant préalablement organisée selon une liste séquentielle d'affectations, les affectations indiquant, en correspondance avec les coeurs, des partitions et des temps prédéterminés,
   ledit procédé comprenant les étapes selon lesquelles :
      chaque coeur est sélectivement utilisé, pendant un temps prédéterminé indiqué dans une affectation de la liste, pour l'exécution d'une partition applicative indiquée en correspondance avec le coeur dans l'affectation, et il est déclenché un basculement de l'utilisation sélective du coeur, à l'issue dudit temps prédéterminé, vers l'exécution de la partition indiquée en correspondance dudit coeur dans l'affectation suivante de la liste séquentielle d'affectations pendant le temps prédéterminé indiqué en correspondance avec ledit coeur dans ladite affectation suivante.

On connaît du document « Air Hypervisor Using RTEMS SMP » de Bruno Gomes, un procédé d'accès aux ressources partagées d'une plateforme informatique.

Dans les domaines techniques comme par exemple le domaine de l'avionique, de l'automobile, ou du nucléaire, il est très important de savoir déterminer pour chaque donnée numérique un temps de propagation maximal et d'être ainsi en mesure de garantir qu'une telle donnée sera délivrée d'une ressource à une autre en un temps limité caractérisé par le temps de propagation maximal.

L'exécution simultanée de plusieurs logiciels sur un même processeur multi-coeurs s'accompagne de risques de contentions à cause du partage de ressources communes (bus, mémoire, périphériques d'entrée et/ou de sortie) : cela peut se traduire par des durées d'exécution de processus non maîtrisées et donc par une perte de déterminisme, ce qui est un obstacle important à la qualification des plateformes.

Le terme « contention » désigne toute situation dans laquelle au moins une activité menée par au moins un coeur d'un processeur multi-coeurs subit des retards dans son exécution à cause du parallélisme temporel permis par ce processeur multi-caeurs.

Il existe donc un besoin, sachant que certaines ressources communes, notamment des périphériques matériels dédiés aux entrées et aux sorties, ne supportent pas d'accès concurrents, d'offrir aux applications hébergées sur une plateforme multicoeur, la même qualité de service qu'en monocoeur, sur le plan du déterminisme sans pour autant demander à chaque application de prévoir dans son budget temporel une marge suffisante pour absorber les contentions possibles dues aux autres applications accédant à ces mêmes ressources communes.

A cet effet, suivant un premier aspect, l'invention propose un procédé de d'accès aux ressources partagées d'une plateforme informatique selon la revendication 1.

L'invention permet ainsi de réduire les contentions, permet de contribuer à une maîtrise des temps de traitement, avec des bornes maximum des temps de traitement, à ce que les applications puissent être exécutées de façon indépendante les unes des autres et à maintenir la capacité de certification incrémentales en multi-caeur.

Dans des modes de réalisation, le procédé d'accès aux ressources partagées d'une plateforme informatique suivant est selon l'une quelconque des revendications 2 à 5.

Suivant un deuxième aspect, la présente invention propose un programme d'ordinateur selon la revendication 6.

Suivant un troisième aspect, la présente invention propose une plateforme informatique selon l'une quelconque des revendications 7 à 9.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une plateforme avionique dans un mode de réalisation de l'invention ;
[Fig 2] la figure 2 est un organigramme d'étapes mises en oeuvre dans un mode de réalisation de l'invention ;
[Fig 3] la figure 3 illustre l'utilisation des coeurs de la plateforme dans un mode de réalisation de l'invention ;
[Fig 4] la figure 4 illustre l'apport de l'invention par rapport aux solutions de l'art antérieur.

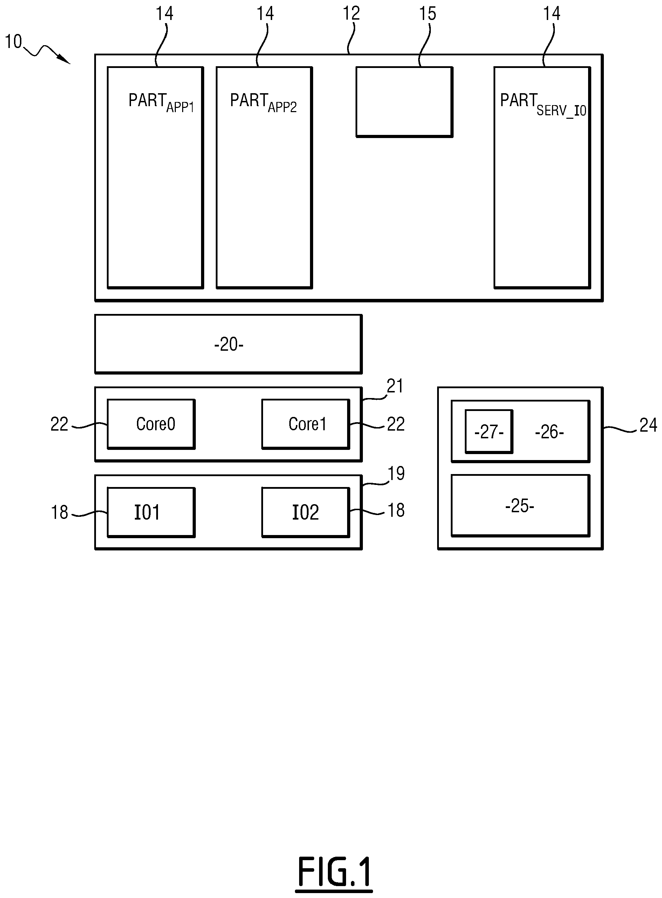

La figure 1 représente une plateforme électronique 10, notamment une plateforme avionique destinée à être embarquée à bord d'un aéronef, par exemple un avion (en variante, l'aéronef est par exemple un hélicoptère ou encore un drone piloté à distance par un pilote, etc.).

Dans le mode de réalisation considéré, la plateforme avionique 10 comprend une mémoire 12, un système d'exploitation 20, un processeur 21, un ensemble 19 de périphériques d'entrée et/ou de sortie et un dispositif électronique de contrôle 24.

La plateforme 10 est par exemple reliée à d'autres systèmes électroniques, tels que des systèmes électroniques avioniques de l'aéronef (ex : système Radio, système « Flight Management », système anti collision (TAWS), ...).

La mémoire 12 stocke une pluralité de partitions 14.

Ces partitions 14 comportent les partitions PART_{APPi}, avec i=1 à m, m entier supérieur ou égal à 2, qui sont des applications logicielles appelées également fonctions avioniques et qui remplissent par exemple différentes fonctions pour l'accomplissement d'un vol, dont certaines, critiques en termes de sécurité, comme la fonction de freinage ou la fonction d'affichage des paramètres de vol, l'exécution de chaque fonction devant donc être maîtrisée de façon robuste. Dans le cas considéré, m = 2 : la mémoire stocke les partitions PART_{APP1} et PART_{APP2} représentées sur la figure 1.

Parmi les partitions figure en outre, selon l'invention, une partition spécifique PART_{SERV_IO} 14, dite partition d'accès aux périphériques IO. Cette partition PART_{SERV_IO} 14 est adaptée pour centraliser les échanges avec les périphériques IO 18.

Une partition 14 est un programme chargeable dans un espace d'adressage unique dans la plateforme 10. La plateforme 10, via son système d'exploitation 20 et le dispositif électronique de contrôle 24 selon l'invention, est adaptée pour mettre en oeuvre l'exécution des partitions 14 et contrôler l'utilisation, par une partition, du temps d'utilisation du processeur 21 de sorte que chaque partition est isolée des autres partitions partageant la plateforme 1.

Les partitions 14 sont cadencées sur la base d'un cycle temporel de travail, maintenu par le système d'exploitation 20.

Une partition 14 comprend une ou plusieurs unités de programmation, appelée(s) processus, partageant le même espace d'adressage, qui peuvent opérer séquentiellement ou en parallèle et qui se combinent dynamiquement pour fournir les fonctions associées à la partition.

Le processeur 21, adapté pour exécuter les partitions sous le contrôle du système d'exploitation 20 et du dispositif électronique de contrôle 24 est un processeur multi-coeur, comportant une pluralité de coeurs 22, par exemple les coeurs CoreO, Core1 comme représentés en figure 1, voire aussi dans des modes de réalisation des coeurs supplémentaires Core2, Core3 (non représentés en figure 1) etc.

L'ensemble 19 de périphériques d'entrée et/ou de sortie comporte n périphériques d'entrée/sortie 18, nommés périphériques IO, avec n nombre entier supérieur ou égal à 2.

Dans le cas considéré, l'ensemble 19 de périphériques d'entrée et/ou de sortie comporte deux périphériques d'entrée/sorties 18, le périphérique IO1 18 et le périphérique IO2 18.

De façon connue, les périphériques IO 18 sont adaptés pour recevoir des requêtes d'accès en écriture, respectivement en lecture, de leur contenu et pour répondre à ces requêtes, en écrivant les données à écrire et en délivrant un acquit d'écriture, respectivement en fournissant les données lues.

Le dispositif électronique de contrôle 24 comprend par exemple une mémoire 26 (qui dans un mode de réalisation est partie de la mémoire 12) et un bloc électronique de contrôle 25.

Le bloc électronique de contrôle 25 du dispositif électronique de contrôle 24 est adapté pour séquencer l'exécution des partitions sur le processeur 21 en fonction d'une liste séquentielle d'affectations 27 stockée par exemple dans la mémoire 26. Dans un mode de réalisation, le dispositif électronique de contrôle 24 est intégré dans le système d'exploitation 20, qui réalise le séquencement.

Les affectations de la liste séquentielle d'affectations indiquent, en correspondance avec les coeurs, les partitions et les temps prédéterminés, de façon à ce que chaque partition soit exécutée sur le coeur qui lui est affecté selon une affectation donnée, pendant le temps prédéterminé tel indiqué dans l'affectation, le bloc électronique de contrôle 25 étant adapté pour, à l'issue dudit temps, basculer l'utilisation du coeur vers l'exécution de la partition qui est affectée audit coeur dans l'affectation suivante de la liste séquentielle.

Les affectations sont déterminées par ledit bloc de contrôle 25. Les temps prédéterminés sont notamment calculés en fonction d'une allocation temporelle budgétée pour chaque partition lors de l'installation de celle-ci sur la plateforme 1, selon des objectifs de performance visés.

Lorsqu'une partition PART_{APP1} 14 ou PART_{APP2} 14 (en-dehors de la partition spécifique PART_{SERV_IO}) est en cours d'exécution, certains processus de la partition mis en oeuvre donnent lieu à l'exécution de commandes requérant l'accès à un, ou plusieurs, périphérique(s) IO 18. Selon l'invention, les partitions PART_{APP1} et PART_{APP2} sont définies de sorte que ces commandes d'accès aux périphériques IO sont adressées à la partition d'accès aux périphériques IO PART_{SERV_IO}.

La partition d'accès aux périphériques IO PART_{SERV_IO} est adaptée pour, lors de son exécution sur le processeur 21, effectuer les accès aux périphériques IO 18, pour mettre en oeuvre avec les périphériques IO 18 les opérations résultantes de lecture et/ou d'écriture correspondantes et pour ensuite délivrer aux partitions à l'origine de ces opérations le résultat de ces opérations (i.e. fournir les données interrogées pour une opération de lecture, fournir un acquittement du résultat d'écriture pour une opération d'écriture).

Le bloc électronique de contrôle 25 est adapté pour réserver, pour l'exécution de la partition d'accès aux périphériques IO PART_{SERV_IO}, de multiples coeurs de façon synchrone sur des temps prédéterminés via des affectations respectives dans la liste séquentielle d'affectations, les conditions suivantes étant respectées pendant chacun des temps prédéterminés affectés à ladite partition sont :
- les accès à des périphérique IO 18 distincts effectués par la partition d'accès aux périphériques IO PART_{SERV_IO} sont exécutés par des coeurs 22 réservés distincts ; et
- pour chaque périphérique IO 18, tous les accès au périphérique IO 18 effectués par la partition d'accès aux périphériques IO PART_{SERV_IO} sont exécutés, pendant ledit temps prédéterminé, par un coeur unique parmi les coeurs réservés.

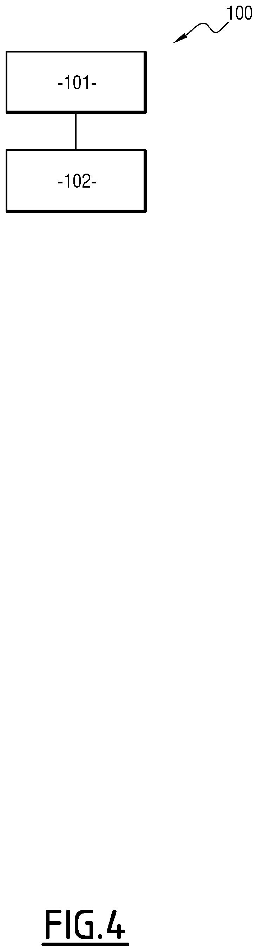

La figure 4 illustre un procédé dans un mode de mise en oeuvre de l'invention.

Dans une étape préalable 101 de conception de la plateforme 10, au moins une partition spécifique PART_{SERV_IO} 14, dite partition d'accès aux périphériques IO, est créée (dans un mode de réalisation, plusieurs partitions PART_{SERV_IO} sont créées), destinée à collecter l'ensemble des commandes d'accès aux périphériques IO effectuées par des partitions avioniques, par exemple PART_{APP1} et PART_{APP2}. Ces dernières, elles, sont définies de façon à adresser à la partition spécifique PART_{SERV_IO} leurs commandes d'accès aux périphériques IO.

Les échanges entre la partition PART_{SERV_IO} d'accès aux ressources IO et les partitions avioniques PART_{APP1} et PART_{APP2}, comprenant la transmission de ces commandes, puis la fourniture du résultat de la mise en oeuvre de ces commandes, sont effectués via une mémoire, par exemple de type RAM volatile non dédiée, référencée 15 sur la figure 1, dans laquelle les partitions avioniques PART_{APP1} et PART_{APP2} écrivent les commandes d'accès aux périphériques IO, dans laquelle la partition PART_{SERV_IO} lit ces commandes, puis y écrit le résultat de la réalisation de ces commandes suite à écriture/lecture dans les périphériques IO indiquées dans les commandes et enfin dans laquelle les partitions avioniques PART_{APP1} et PART_{APP2} viennent extraire le résultat de leurs commandes d'accès aux périphériques IO.

Dans un mode de réalisation, les commandes et résultats de commandes prennent la forme de messages, sur la base de l'interface de programmation (API) de la norme A653 : les applications PART_{APP1} et PART_{APP2} font une acquisition des messages lus précédemment par la partition PART_{SERV_IO} et poussent des messages vers la partition PART_{SERV_IO} pour l'émission physique de ces messages vers IO1 ou IO2 lors de sa prochaine allocation temporelle.

Un budget en terme d'utilisation de la mémoire et un budget en terme de temps d'utilisation du processeur (en fonction duquel va être fixé le temps prédéterminé indiqué dans chaque affectation de la liste d'affectations 27 sont affectés sélectivement à chaque partition 14, PART_{SERV_IO}, PART_{APP1}, PART_{APP2} : en particulier, ces budgets pour PART_{SERV_IO} sont dimensionnés pour permettre la prise en charge de toutes les lectures, écritures des périphériques IO1 18 et IO2 18, susceptibles d'être commandées par les partitions PART_{APP1}, PART_{APP2} .

Dans un mode de réalisation, pour chaque partition PART_{APPi} ici avec i=1, 2, chaque port APEX IO (cf. norme ARINC 653) de niveau partition associé à la partition PART_{APPi} peut être configuré, si besoin, avec l'identifiant de la partition PART_{SERV_IO}, et en outre avec la fréquence de l'activation demandée et son décalage (phase) dans la Major Frame (i.e. par rapport à la trame temporelle de base de durée égale au cycle temporel de travail maintenu par le système d'exploitation 20 : il est ainsi défini, pour chaque partition PART_{APPi} et pour chaque périphérique IOj, j=1,2 à quelle fréquence Fij, la partition PART_{SERV_IO} pendant qu'elle s'exécute sur le processeur 21, va s'interfacer de façon active au périphérique IOj pour accéder au périphérique IOj et ainsi pouvoir déterminer si le résultat de lectures précédemment commandées sont disponibles, puis ensuite pour écrire les données dans la RAM 15.

La partition d'accès aux périphériques IO PART_{SERV_IO} agit ainsi comme un serveur et peut ainsi servir une ou plusieurs partitions, celles-ci ne partageant pas de ports au sein de PART_{SERV_IO}.

Cette configuration réalise ainsi l'agrégation des besoins exprimés dans les configurations indépendantes des partitions PART_{APPi} et permet de préserver l'aspect incrémental de la plateforme 10 (i.e. la plateforme peut intégrer des applications supplémentaires tout en continuant à garantir le déterminisme des traitements).

La partition PART_{SERV_IO} est par exemple configurée pour traiter d'abord les commandes (et acquits) de type INPUT (i.e. écriture), puis ensuite celles de type OUTPUT (écriture) dans les périphériques IO 18. Cette disposition permet de minimiser la latence d'acquisition.

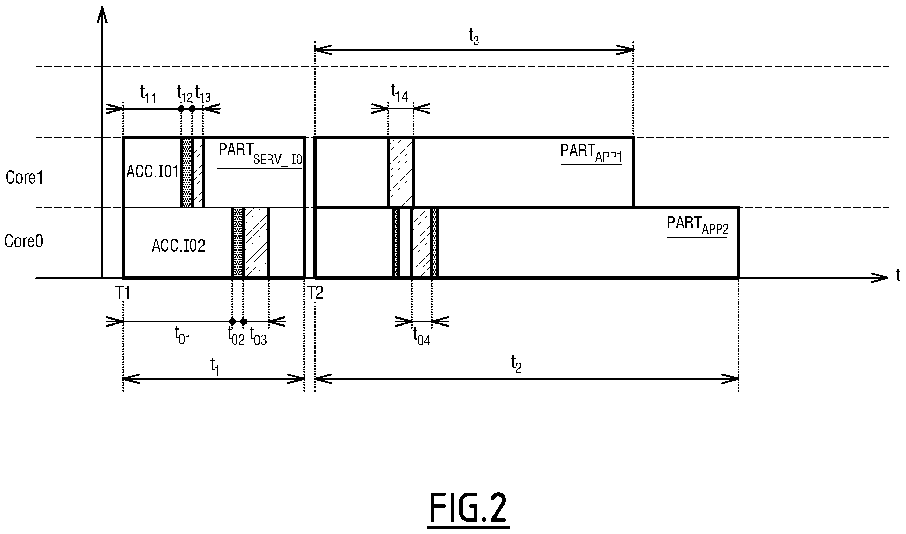

Dans une étape ultérieure de fonctionnement opérationnel de la plateforme 10, en référence à la figure 2, en considérant l'affectation courante dans la liste séquentielle d'affectations 27 indiquant que les coeurs 22 Core0 et Core1 sont affectés spécifiquement et de façon synchrone à l'exécution de la partition d'accès aux périphériques IO PART_{SERV_IO} 14, le bloc électronique de contrôle 25 commute l'activité de ces coeurs pour exécuter cette partition PART_{SERV_IO} 14, à partir du temps T1 et pendant le temps t₁ indiqué dans l'affectation considérée, en affectant spécifiquement le coeur 22 Core0 aux accès au périphérique 18 IO2 et en affectant spécifiquement le coeur 22 Core1 aux accès au périphérique 18 IO1.

Les accès aux périphériques IO1 et IO2 sont ainsi chacun organisés par coeur, minimisant ainsi les contentions liées aux IO1 et IO2 18) .

La partition PART_{SERV_IO} 14 lit dans la RAM 15 les commandes d'écriture dans les périphériques 18 IO1, IO2 à traiter, précédemment déposées dans la RAM 15 par les partitions PART_{APPi} pendant leurs temps d'exécution ; puis la partition PART_{SERV_IO} 14 effectue ces opérations d'écriture ainsi commandées dans les périphériques 18 IO1, IO2.

Puis la partition PART_{SERV_IO} 14 lit dans la RAM 15 les commandes de lecture dans les périphériques 18 IO1, IO2 à traiter ; la partition PART_{SERV_IO} 14 effectue alors ces opérations de lecture ainsi commandées dans les périphériques 18 IO1, IO2. Tant que les données de lecture requises auprès des périphériques IO 18 ne sont pas mises à disposition, la partition PART_{SERV_IO} 14 va écouter le périphérique IOj, j= 1, 2, 18 concerné par cette opération de lecture, à la fréquence définie (et avec la phase temporelle définie) pour ce périphérique et pour la partition PART_{APPi} ayant commandé cette lecture. A l'issue de l'opération de lecture, la partition PART_{SERV_IO} 14 dépose dans la RAM 15 les données lues à destination de la partition PART_{APPi}

Dès le temps t₁ écoulé à compter de T1, le bloc électronique de contrôle 25 commute l'activité des coeurs CoreO, Core1 pour, pendant un temps t₂ indiqué dans l'affectation suivante dans la liste séquentielle d'affectations 27, exécuter cette partition PART_{SERV_IO} 14 ; à partir du temps T2, le coeur Core0 est dédié à l'exécution de la partition PART_{APP2} tandis que le coeur Core1 est dédié à l'exécution de la partition PART_{APP1} conformément au contenu de cette affectation. Pendant ce temps t2, chaque partition PART_{APPi}, i= 1, 2 écrit dans la RAM 15 ses commandes d'accès aux périphériques IO1, IO2 18 (sous forme de messages à émettre dans le cas APl de la norme A653) et extrait de la RAM les résultats de commande d'accès précédemment déposés dans la RAM (sous forme de messages acquis dans le cas API de la norme A653) par la partition PART_{SERV_IO} 14

Sur la figure 2, ont été indiqués, pendant le temps t₁ d'affectation des deux coeurs CoreO, Core1 à la partition PART_{SERV_IO} 14, les temps respectifs cumulés de dialogue avec les périphériques IO1, IO2 18 (zone libre libellée ACC. IO1, ACC. IO2), les temps de contentions (zone à points) et les temps d'écriture/lecture en RAM 15 (zone hachurée) : ainsi l'accès au périphérique IO1 par la partition PART_{SERV_IO} 14 a duré un temps t₁₁, les phénomènes de contention relatifs à l'accès au périphérique IO1 18 ont duré un temps t₁₂, le temps d'écriture/lecture en RAM 15 relatif aux commandes et résultats de lecture/écriture sur le périphérique IO1 18 a duré un temps t₁₃; similairement l'accès au périphérique IO2 par la partition PART_{SERV_IO} 14 a duré un temps t₀₁, les phénomènes de contention relatifs à l'accès au périphérique IO2 18 ont duré un temps t₀₂, le temps d'écriture/lecture en RAM 15 relatif aux commandes et résultats de lecture/écriture sur le périphérique IO2 18 a duré un temps t₀₃.

Les temps de contention t₀₂, t₁₂ se révèlent plus faibles que dans les solutions de l'art antérieur ; les contentions ont lieu dans l'exécution de la partition PART_{SERV_IO} 14.

Sur la figure 2, ont été indiqués, durant le temps t₂ affecté à l'exécution de la partition PART_{APP2} sur le coeur Core0 et en parallèle à l'exécution de la partition PART_{APP1} sur le coeur Core1 durant le temps t₃, les temps d'écriture/lecture en RAM 15 (zone hachurée) ; les temps de contentions mémoire (traits verticaux) sont de durée négligeable au premier ordre (les données IO sont récupérées d'une mailbox en RAM CPU 15 pour laquelle la bande passante et le partage ont été dimensionnés en conséquence) ; le temps d'écriture/lecture en RAM 15 par la partition PART_{APP1} relatif aux commandes - et résultats - d'accès aux périphérique IO1, IO2 18 par la partition PART_{APP1} a duré un temps t₁₄ ; le temps d'écriture/lecture en RAM 15 par la partition PART_{APP2} relatif aux commandes - et résultats - de lecture/écriture sur les périphérique IO1, IO2 18 par la partition PART_{APP2} a duré un temps t₀₄.

Dans le mode de réalisation décrit ci-dessus, deux coeurs sont utilisés pour les accès à deux périphériques IO 18 : la solution est bien sûr ajustable, et un nombre n de coeurs seront utilisés selon l'invention pour accéder à n périphériques IO 18, avec n entier quelconque supérieur à 2.

Par ailleurs, le fait que la partition PART_{SERV_IO} soit répartie sur les n coeurs (n=2 dans le cas présent) a pour effet de permettre une collaboration pour la transmission des messages : dans un mode de réalisation, les échanges avec la RAM 15 relatives aux données à lire ou écrire dans la RAM 15 dans le cadre du traitement des accès au périphérique IO2 sont réaffectés au coeur Core1 par le bloc électronique de contrôle 25, en fonction d'au moins la charge de Core1, par exemple en cas de déséquilibre de charge, entre les deux coeurs, supérieur à un seuil fixé.

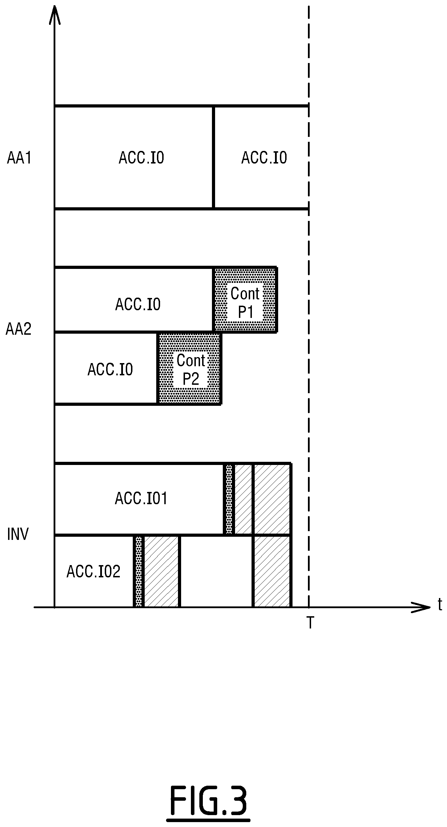

La figure 3 illustre différentes situations. L'axe des abscisses est l'axe du temps, et T est un temps d'exécution par le processeur, sur l'axe des ordonnées sont indiquées trois situations AA1, AA2 et INV.

Dans la situation AA1 de l'art antérieur correspondant au cas d'une plateforme avionique avec un processeur à coeur unique, les partitions s'exécutent séquentiellement et le temps CPU pris par les partitions pour les accès aux périphériques IO se cumule.

Dans la situation AA2 de l'art antérieur correspondant au cas d'une plateforme avionique avec un processeur multi-coeur : les partitions s'exécutent en parallèle sur des coeurs distincts (sur la FIG3, une ligne par partition), les accès aux périphériques IO partagés (ACC. IO) peuvent devenir concurrents : il est nécessaire de prévoir une réserve importante dans les allocations temporelles aux partitions pour prendre en compte l'élongation des services d'accès aux IO compte-tenu des potentielles contentions (CONT P1 pour une des partition, Cont P2 pour l'autre partition).

Selon l'invention correspondant à la situation INV en figure 3, les contentions (zones à points) apparaissent fortement réduites par rapport à l'art antérieur, les temps d'accès à la RAM 15 sont représentés en hachuré.

Les solutions de l'art antérieur ne permettent pas d'offrir une caractérisation satisfaisante des temps de services d'accès IO qui ne dépendent pas de l'activité des applications en concurrence sur ces mêmes IOs. Ceci est d'autant plus vrai pour des contrôleurs d'IO dédiés, vus et accédés à travers des périphériques du SoC, qui sont existants et ne permettant pas des accès partagés équitablement entre les coeurs initiateurs des transactions IO. Cela impose un effort de caractérisation plus important au niveau de la plateforme multi-coeur IMA, mais aussi et surtout, au niveau des activités de vérification réalisées par chaque application qui voudra se déployer sur la plateforme multi-coeur IMA.

Dans un mode de réalisation, la mémoire 12, le système d'exploitation 20, le processeur 21 et le dispositif électronique de contrôle 24 sont intégrés dans un même puce électronique (SoC ou en anglais « System On Chip »).

Dans des modes de réalisation, certains au moins des périphériques d'entrée et/ou de sortie 18 sont des périphériques extérieurs, i.e. ils ne sont pas intégrés au SoC.

Dans des modes de réalisation, les périphériques d'entrée et/ou de sortie 18 sont également intégrés au SoC.

Dans un mode de réalisation, les étapes mises en oeuvre par le bloc électronique de contrôle 25 sont le résultat de l'exécution, sur un processeur, d'instructions logicielles d'un programme d'ordinateur stocké dans une mémoire. Dans un tel cas, le bloc électronique de contrôle 25 comprend alors cette mémoire et ce processeur.

Dans un autre mode de réalisation, le bloc électronique de contrôle 25 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit*).

La présente invention permet ainsi de partager des ressources I/O entre applications au sein d'une plateforme avionique multi-coeur certifiée et avec la capacité de certification incrémentale en garantissant les temps d'exécution des applications accédant à ces I/O indépendamment des accès concurrents des applications s'exécutant sur les autres coeurs du processeur, comme requis par la norme DO-297 fixant les directives minimales pour l'avionique modulaire intégrée (IMA, en anglais « Integrated Modular Avionics"). Pour cela, les accès aux périphériques IO sont organisés en regroupant les accès à un périphérique IO par un seul coeur, pour réduire les contentions logicielles et matérielles.

La présente invention permet de conserver les propriétés indispensables pour une plateforme IMA (Certification Incrémentale) qui sont :
- le partitionnement robuste extensible (« extended robust partitioning ») et
- l'incrémentalité ;
ce qui requiert de maîtriser que :
- une application (ou un groupe d'applications maitrisées) n'a pas d'influence sur les autres applications du moment qu'elle reste dans le budget (de temps, de mémoire, ...) qui lui est alloué ;
- les temps des services offerts restent maîtrisés quelles que soient les conditions d'exécution.

Cette invention préserve la performance globale de la solution en offrant en outre aux applications avioniques des capacités de configuration des fréquences d'acquisition qui leur sont propres et qui ainsi peuvent être distinctes entre applications.

L'invention a été décrite ci-dessus dans un contexte avionique, elle est bien sûr utilisable dans tout autre contexte.

L'invention a été décrite en référence à la maîtrise des accès aux périphériques IO. Elle est bien sûr utilisable, de façon plus générale, pour maîtriser les temps d'accès à tout type de ressources communes aux coeurs, outre les périphériques IO : bus, mémoires, ARINC664, mémoire non volatile, ARINC429 (bus de com) etc.

## Revendications

1. Procédé d'accès aux ressources partagées d'une plateforme informatique (10) comprenant :
- au moins un processeur multicoeurs (21) comprenant au moins deux coeurs (22) ;
- un ensemble de partitions applicatives (14) exécutables sur le processeur ;
- un ensemble (19) de ressource(s) partagée(s) (18) entre lesdites partitions applicatives ;
selon lequel l'ensemble des partitions applicatives comprend des premières partitions générant des requêtes d'accès à au moins une ressource partagée de l'ensemble de ressource(s) partagée(s), transmettant des données numériques à écrire dans ladite ressource partagée ou interrogeant ladite ressource partagée ;
l'utilisation des coeurs par les partitions applicatives étant préalablement organisée selon une liste séquentielle (27) d'affectations, les affectations indiquant, en correspondance avec les coeurs, des partitions et des temps prédéterminés,
ledit procédé comprenant les étapes selon lesquelles :
chaque coeur est sélectivement utilisé, pendant un temps prédéterminé indiqué dans une affectation de la liste, pour l'exécution d'une partition applicative indiquée en correspondance avec le coeur dans l'affectation, et il est déclenché un basculement de l'utilisation sélective du coeur, à l'issue dudit temps prédéterminé, vers l'exécution de la partition indiquée en correspondance dudit coeur dans l'affectation suivante de la liste séquentielle d'affectations pendant le temps prédéterminé indiqué en correspondance avec ledit coeur dans ladite affectation suivante ;
ledit procédé étant **caractérisé en ce qu'**il comprend en outre les étapes suivantes :
- l'ensemble de partitions applicatives (14) comprenant au moins une deuxième partition, dite partition d'accès aux ressources partagées, lesdites requêtes d'accès émises par les premières partitions lors de leur exécution sur le processeur sont adressées à la partition d'accès aux ressources partagées ;
- la partition d'accès aux ressources partagées, lors de son exécution sur le processeur, effectue les accès aux ressources partagées pour mettre en oeuvre les requêtes d'accès aux ressources partagées ;
- on réserve, pour l'exécution de la partition d'accès aux ressources partagées, de multiples coeurs (22) de façon synchrone sur des temps prédéterminés via des affectations respectives dans la liste séquentielle d'affectations, les conditions suivantes devant être respectées pendant chacun des temps prédéterminés affectés à ladite partition :
- les accès à des ressources partagées distinctes (18) effectués par la partition d'accès aux ressources partagées de l'ensemble sont exécutés par des coeurs réservés distincts ; et
- pour chaque ressource partagée de l'ensemble, tous les accès à la ressource partagée effectués par la partition d'accès aux ressources partagées sont exécutés, pendant ledit temps prédéterminé, par un coeur unique parmi les coeurs réservés,
et **en ce qu'**il est prédéfini pour chaque première partition (14) relativement à chaque ressource partagée (18), une fréquence respective,
la partition d'accès aux ressources partagées (14), pendant chacun de ses temps prédéterminés d'exécution, accédant à ladite ressource partagée (18) à ladite fréquence pour recueillir des données fournies en réponse par ladite ressource partagée à une requête d'accès émise par ladite première partition et mise en oeuvre par la partition d'accès aux ressources partagées.

2. Procédé d'accès aux ressources partagées d'une plateforme informatique (10) selon la revendication 1, selon lequel la partition d'accès aux ressources partagées (14) transmet à destination des premières partitions les réponses, fournies par les ressources partagées, aux requêtes.

3. Procédé d'accès aux ressources partagées d'une plateforme informatique selon la revendication 1 ou 2, selon lequel les ressources partagées de l'ensemble de ressource(s) partagée(s) sont des périphériques d'entrées et/ou de sortie (18) de la plateforme informatique.

4. Procédé d'accès aux ressources partagées d'une plateforme informatique selon l'une des revendications précédentes, selon lequel la plateforme (10) est une plateforme avionique.

5. Procédé d'accès aux ressources partagées d'une plateforme informatique (10) selon l'une des revendications précédentes, selon lequel lesdites requêtes d'accès émises par les premières partitions lors de leur exécution sur le processeur sont adressées à la partition d'accès aux ressources partagées en les déposant dans une mémoire de travail (15) dans laquelle la partition d'accès aux ressources partagées viendra les lire et selon lequel les réponses auxdites requêtes sont déposées dans ladite mémoire par la partition d'accès aux ressources partagées,
et selon lequel, les accès à une première, respectivement deuxième, ressource partagée étant exécutés pendant un temps prédéterminé, par un premier, respectivement deuxième, des coeurs réservés, la lecture dans la mémoire de travail des requêtes d'accès à la première, deuxième, ressource ou le dépôt dans la mémoire de travail des réponses audites requêtes devant être effectué par ledit premier, respectivement coeur réservé pendant ledit temps prédéterminé; et selon lequel
en fonction d'au moins l'activité du deuxième des coeurs réservés, il est déclenché l'affectation audit deuxième coeur, pendant ledit temps prédéterminé, d'au moins une partie de la lecture dans la mémoire de travail des requêtes d'accès à la première ressource ou du dépôt dans la mémoire de travail des réponses audites requêtes.

6. Programme d'ordinateur, comportant des instructions logicielles qui, lorsqu'elles sont exécutées par un ordinateur, mettent en oeuvre un procédé selon l'une des revendications 1 à 5.

7. Plateforme informatique (10) comprenant :
- au moins un processeur multicoeurs (21) comprenant au moins deux coeurs (22) ;
- un ensemble de partitions applicatives (14) exécutables sur le processeur ;
- un ensemble (19) de ressource(s) partagée(s) (18) entre lesdites partitions applicatives ;
dans laquelle l'ensemble des partitions applicatives comprennent des premières partitions générant des requêtes d'accès à au moins une ressource partagée de l'ensemble de ressource(s) partagée(s), transmettant des données numériques à écrire dans ladite ressource partagée ou interrogeant ladite ressource partagée ;
comprenant une liste séquentielle (27) d'affectations organisant préalablement l'utilisation des coeurs par les partitions applicatives, les affectations indiquant, en correspondance avec les coeurs, des partitions et des temps prédéterminés,
ladite plate-forme étant adaptée pour utiliser chaque coeur sélectivement pendant un temps prédéterminé indiqué dans une affectation de la liste pour l'exécution d'une partition applicative indiquée en correspondance avec le coeur dans l'affectation,
ladite plate-forme étant adaptée pour déclencher un basculement de l'utilisation sélective du coeur, à l'issue dudit temps prédéterminé, vers l'exécution de la partition indiquée en correspondance dudit coeur dans l'affectation suivante de la liste séquentielle d'affectations pendant le temps prédéterminé indiqué en correspondance avec ledit coeur dans ladite affectation suivante ;
ladite plate-forme étant **caractérisée en ce que** l'ensemble de partitions applicatives (14) comprend au moins une deuxième partition, dite partition d'accès aux ressources partagées, lesdites requêtes d'accès émises par les premières partitions lors de leur exécution sur le processeur étant adressées à la partition d'accès aux ressources partagées ;
- la partition d'accès aux ressources partagées est adaptée pour, lors de son exécution sur le processeur, effectuer les accès aux ressources partagées pour mettre en oeuvre les requêtes d'accès aux ressources partagées ;
- ladite plate-forme étant adaptée pour réserver, pour l'exécution de la partition d'accès aux ressources partagées, de multiples coeurs (22) de façon synchrone sur des temps prédéterminés via des affectations respectives dans la liste séquentielle d'affectations, et pour respecter les conditions suivantes pendant chacun des temps prédéterminés affectés à ladite partition :
- les accès à des ressources partagées distinctes (18) effectués par la partition d'accès aux ressources partagées de l'ensemble sont exécutés par des coeurs réservés distincts ; et
- pour chaque ressource partagée de l'ensemble, tous les accès à la ressource partagée effectués par la partition d'accès aux ressources partagées sont exécutés, pendant ledit temps prédéterminé, par un coeur unique parmi les coeurs réservés,
et **en ce qu'**il est prédéfini pour chaque première partition (14) relativement à chaque ressource partagée (18), une fréquence respective, la partition d'accès aux ressources partagées (14), pendant chacun de ses temps prédéterminés d'exécution, accédant à ladite ressource partagée (18) à ladite fréquence pour recueillir des données fournies en réponse par ladite ressource partagée à une requête d'accès émise par ladite première partition et mise en oeuvre par la partition d'accès aux ressources partagées.

8. Plateforme informatique (10) selon la revendication 7, dans laquelle la partition d'accès aux ressources partagées (14) est adaptée pour transmettre à destination des premières partitions les réponses, fournies par les ressources partagées, aux requêtes.

9. Plateforme informatique selon la revendication 7 ou 8, dans laquelle les ressources partagées de l'ensemble de ressource(s) partagée(s) sont des périphériques d'entrées et/ou de sortie (18) de la plateforme informatique.

## Patentansprüche

1. Verfahren zum Zugang zu gemeinsam genutzten Ressourcen einer IT-Plattform (10), umfassend:
- mindestens einen Multicore-Prozessor (21) mit mindestens zwei Kernen (22);
- einen Satz von Anwendungspartitionen (14), die auf dem Prozessor ausgeführt werden können;
- einen Satz (19) von gemeinsam genutzten Ressource(n) (18) zwischen den Anwendungspartitionen;
wobei der Satz von Anwendungspartitionen erste Partitionen umfasst, die Anfragen für den Zugang zu mindestens einer gemeinsam genutzten Ressource des Satzes der gemeinsam genutzten Ressource(n) erzeugen sowie die Übertragung digitaler Daten, die in die gemeinsam genutzte Ressource geschrieben werden sollen, oder die Abfrage der gemeinsam genutzten Ressource;
die Nutzung der Kerne durch die Anwendungspartitionen zuvor gemäß einer sequentiellen Liste (27) von Zuweisungen organisiert wird, wobei die Zuweisungen in Übereinstimmung mit den Kernen vorbestimmte Partitionen und Zeiten angeben,
wobei das Verfahren die Schritte umfasst, laut derer:
jeder Kern während einer vorbestimmten Zeit, die in einer Zuordnung der Liste angegeben ist, selektiv für die Ausführung einer Anwendungspartition verwendet wird, die in der Zuordnung entsprechend dem Kern angegeben ist,
und ein Umschalten der selektiven Verwendung des Kerns nach dem Ende der vorbestimmten Zeit ausgelöst wird, um die angegebene Partition entsprechend dem Kern in der Zuweisung entsprechend der sequentiellen Liste von Zuweisungen während der angegebenen vorbestimmten Zeit entsprechend dem genannten Kern in der folgenden Zuweisung auszuführen;
wobei das Verfahren **dadurch gekennzeichnet ist, dass** es unter anderem die folgenden Schritte umfasst:
- der Satz von Anwendungspartitionen (14) umfasst mindestens eine zweite Partition, die als Partition für den Zugang zu gemeinsam genutzten Ressourcen bezeichnet wird, wobei die von den ersten Partitionen bei ihrer Ausführung auf dem Prozessor ausgegebenen Zugangsanfragen an die Partition für den Zugang zu gemeinsam genutzten Ressourcen gerichtet werden;
- die Partition für den Zugang zu gemeinsam genutzten Ressourcen führt bei ihrer Ausführung auf dem Prozessor Zugriffe auf gemeinsam genutzte Ressourcen durch, um Zugangsanfragen zu gemeinsam genutzten Ressourcen zu implementieren;
- mehrere Kerne (22) werden synchron über vorbestimmte Zeiten für die Ausführung der Partition für den Zugang zu den gemeinsam genutzten Ressourcen reserviert, wobei die folgenden Bedingungen während jeder der vorbestimmten Zeiten, die der Partition zugewiesen sind, über respektive Zuweisungen in der Liste sequentieller Zuweisungen erfüllt sein müssen:
- Zugänge zu separaten gemeinsam genutzten Ressourcen (18), die von der Partition für den Zugang zu gemeinsam genutzten Ressourcen des Satzes durchgeführt werden, werden von separaten reservierten Kernen ausgeführt; und
- für jede gemeinsam genutzte Ressource des Satzes werden alle Zugänge zu der gemeinsam genutzten Ressource, die von der Partition für den Zugang zu gemeinsam genutzten Ressourcen, während der genannten vorgegebenen Zeit, von einem einzelnen Kern unter den reservierten Kerne ausgeführt werden,
und für jede erste Partition (14) relativ zu jeder gemeinsam genutzten Ressource (18) ist eine jeweilige Frequenz vordefiniert,
die Partition für den Zugang zu gemeinsam genutzten Ressourcen (14) greift während jeder ihrer vorbestimmten Ausführungszeiten auf die gemeinsam genutzte Ressource (18) mit der Frequenz zu, um Daten zu sammeln, die von der genannten gemeinsam genutzten Ressource als Antwort auf eine Zugangsanfrage bereitgestellt werden, die von der genannten ersten Partition ausgegeben wird und von der Partition für den Zugriff auf gemeinsam genutzte Ressourcen implementiert wird.

2. Verfahren für den Zugang zu gemeinsam genutzten Ressourcen einer IT-Plattform (10) nach Anspruch 1, bei dem die Partition für den Zugang zu gemeinsam genutzten Ressourcen (14) die von den gemeinsam genutzten Ressourcen gelieferten Antworten auf Anfragen an die ersten Partitionen weiterleitet.

3. Verfahren zum Zugang zu gemeinsam genutzten Ressourcen einer IT-Plattform nach Anspruch 1 oder 2, wobei es sich bei den gemeinsam genutzten Ressourcen des Satzes der gemeinsam genutzten Ressource(n) um Eingabe- und/oder Ausgabegeräte (18) der IT-Plattform handelt.

4. Verfahren zum Zugang zu gemeinsam genutzten Ressourcen einer IT-Plattform nach einem der vorhergehenden Ansprüche, wobei die Plattform (10) eine Avionikplattform ist.

5. Verfahren zum Zugang zu gemeinsam genutzten Ressourcen einer IT-Plattform (10) nach einem der vorhergehenden Ansprüche, bei dem die von den ersten Partitionen bei ihrer Ausführung auf dem Prozessor gesendeten Zugangsanfragen an die Partition für den Zugang zu den gemeinsam genutzten Ressourcen gerichtet werden und in einem Arbeitsspeicher (15) abgelegt werden, wo die Partition, die auf die gemeinsam genutzten Ressourcen zugreift sie liest und die Antworten auf die Anfragen von der Partition für den Zugang zu gemeinsam genutzten Ressourcen in dem Speicher abgelegt werden,
und gemäß dem die Zugänge zu einer ersten bzw. zweiten gemeinsam genutzten Ressource während einer vorbestimmten Zeit von einem ersten bzw. zweiten der reservierten Kerne ausgeführt werden, wobei das Lesen der Zugangsanfragen auf die erste, zweite, Ressource im Arbeitsspeicher oder das Ablegen der Antworten auf diese Anfragen im Arbeitsspeicher von dem ersten bzw. reservierten Kern während der vorbestimmten Zeit durchgeführt werden muss; und gemäß dem
in Abhängigkeit von mindestens der Aktivität des zweiten der reservierten Kerne die Zuweisung an den zweiten Kern während der vorbestimmten Zeit ausgelöst wird, wobei mindestens ein Teil des Lesens von Anfragen für den Zugang zu der ersten Ressource aus dem Arbeitsspeicher oder des Ablegens von Antworten auf diese Anfragen im Arbeitsspeicher übernommen wird.

6. Computerprogramm mit Softwareanweisungen, die, wenn sie von einem Computer ausgeführt werden, ein Verfahren nach einem der Ansprüche 1 bis 5 implementieren.

7. IT-Plattform (10) umfassend:
- mindestens einem Multicore-Prozessor (21) mit mindestens zwei Kernen (22);
- einem Satz von Anwendungspartitionen (14), die auf dem Prozessor ausgeführt werden können;
- einen Satz (19) von gemeinsam genutzten Ressource(n) (18) zwischen den Anwendungspartitionen;
wobei der Satz von Anwendungspartitionen erste Partitionen umfasst, die Anfragen für den Zugang zu mindestens einer gemeinsam genutzten Ressource des Satzes der gemeinsam genutzten Ressource(n) erzeugen sowie die Übertragung digitaler Daten, die in die gemeinsam genutzte Ressource geschrieben werden sollen, oder die Abfrage der gemeinsam genutzten Ressource;
mit einer sequentiellen Liste (27) von Zuweisungen, die die Nutzung der Kerne durch die Anwendungspartitionen vorab organisieren, wobei die Zuweisungen entsprechend den Kernen vorbestimmte Partitionen und Zeiten anzeigen, wobei die Plattform dafür ausgelegt ist, jeden Kern selektiv für eine vorbestimmte Zeit, die in einer Zuordnung der Liste angegeben ist, für die Ausführung einer Anwendungspartition zu verwenden, die in Übereinstimmung mit dem Kern in der Zuordnung angegeben ist,
wobei die Plattform so beschaffen ist, dass sie nach Ablauf der vorbestimmten Zeit ein Umschalten von der selektiven Nutzung des Kerns auf die Ausführung der angegebenen Partition auslöst, in Übereinstimmung mit dem Kern in der nächsten Zuweisung der sequentiellen Liste von Zuweisungen während der angegebenen vorbestimmten Zeit in Übereinstimmung mit dem Kern in der nächsten Zuweisung;
wobei die Plattform **dadurch gekennzeichnet ist, dass** der Satz von Anwendungspartitionen (14) mindestens eine zweite Partition umfasst, die als Partition für den Zugang zu gemeinsam genutzten Ressourcen bezeichnet wird, wobei die Zugangsanfragen, die von den ersten Partitionen bei ihrer Ausführung auf dem Prozessor ausgegeben werden, an die Partition für den Zugang zu gemeinsam genutzten Ressourcen gerichtet sind;
- die Partition für den Zugang zu gemeinsam genutzten Ressourcen so beschaffen ist, dass sie bei der Ausführung auf dem Prozessor Zugänge zu gemeinsam genutzten Ressourcen durchführt, um die Anforderungen für den Zugang zu gemeinsam genutzten Ressourcen zu implementieren;
- wobei die Plattform angepasst ist, um für die Ausführung der Partition für den Zugang zu den gemeinsam genutzten Ressourcen mehrere Kerne (22) synchron über vorbestimmte Zeiten durch jeweilige Zuweisungen in der sequentiellen Zuweisungsliste zu reservieren und während jeder der vorbestimmten Zeiten, die der Partition zugewiesen wurden, die folgenden Bedingungen zu erfüllen:
- Zugänge zu separaten gemeinsam genutzten Ressourcen (18), die von der Partition für den Zugang zu gemeinsam genutzten Ressourcen des Satzes durchgeführt werden, werden von separaten reservierten Kernen ausgeführt;
- für jede gemeinsam genutzte Ressource des Satzes werden alle Zugänge zu der gemeinsam genutzten Ressource, die von der Partition für den Zugang zu gemeinsam genutzten Ressourcen, während der genannten vorgegebenen Zeit durchgeführt werden von einem einzelnen Kern unter den reservierten Kernen ausgeführt,
und dass für jede erste Partition (14) in Bezug auf jede gemeinsam genutzte Ressource (18) eine jeweilige Frequenz vordefiniert ist, wobei die Partition für den Zugang zu den gemeinsam genutzten Ressourcen (14) während jeder ihrer vorbestimmten Ausführungszeiten auf die gemeinsam genutzte Ressource (18) mit der genannten Frequenz zugreift, um Daten zu sammeln, die als Antwort der gemeinsam genutzten Ressource auf eine von der ersten Partition ausgegebene und von der Partition für den Zugang zu gemeinsam genutzten Ressourcen implementierte Zugangsanforderung bereitgestellt werden.

8. IT-Plattform (10) nach Anspruch 7, wobei die Partition für den Zugang zu gemeinsam genutzten Ressourcen (14) so ausgelegt ist, dass sie die von den gemeinsam genutzten Ressourcen bereitgestellten Antworten auf Anfragen an die ersten Partitionen weiterleitet.

9. IT-Plattform nach Anspruch 7 oder 8, wobei die gemeinsam genutzten Ressourcen des Satzes der gemeinsam genutzten Ressource(n) Eingabe- und/oder Ausgabegeräte (18) der IT-Plattform sind.

## Claims

1. A method for accessing shared resources of a computer platform (10), including:
- at least one multicore processor (21) including at least two cores (22);
- a set of application partitions (14) executable on the processor;
- a set (19) of resources (18) shared between said application partitions;
wherein the set of application partitions includes first partitions generating requests to access at least one shared resource of the set of shared resources, transmitting digital data to be written in said shared resources or querying said shared resource;
the use of the cores by the application partitions being organized beforehand according to a sequential list (27) of allocations, the allocations indicating, in correspondence with the cores, predetermined partitions and times,
said method comprising the steps in which:
each core is selectively used, during a predetermined time indicated in an allocation of the list, for the execution of an application partition indicated in correspondence with the core in the allocation, and a switching is triggered of the selective use of the core, at the end of said predetermined time, toward the execution of the partition indicated in correspondence with said core in the following allocation of the sequential list of allocations during the predetermined time indicated in correspondence with said core in said following allocation;
said method being **characterized in that** it further comprises the following steps:
- the set of application partitions (14) including at least one second partition, called partition for access to the shared resources, said access requests emitted by the first partitions during their execution on the processor are sent to the partition for access to the shared resources;
- the partition for access to the shared resources, when it is executed on the processor, carries out the access to the shared resources in order to implement the access requests to the shared resources;
- in order to execute the partition for access to the shared resources, multiple cores (22) are reserved synchronously over predetermined times via respective allocations in the sequential list of allocations, the following conditions having to be respected during each of the predetermined times allocated to said partition:
- the separate accesses to shared resources (18) done by the partition for access to the shared resources of the set are done by separate reserved cores; and
- for each shared resource of the set, all of the accesses to the shared resource done by the partition for access to the shared resources are executed, during said predetermined time, by a single core among the reserved cores,
and wherein it is predefined for each first partition (14) relative to each shared resource (18), a respective frequency, and the partition for access to the shared resources (14), during each of its predetermined execution times, accesses said shared resource (18) at said frequency in order to collect data provided by said shared resource in response to an access request emitted by said first partition and implemented by the partition for access to the shared resources.

2. The method for access to shared resources of a computer platform (10) according to claim 1, wherein the partition for access to the shared resources (14) transmits the responses provided by the shared resources to the requests, to the first partitions.

3. The method for access to shared resources of a computer platform according to claim 1 or 2, wherein the shared resources of the set of shared resources are input and/or output peripherals (18) of the computer platform.

4. The method for access to shared resources of a computer platform according to one of the preceding claims, wherein the platform (10) is an avionic platform.

5. The method for access to shared resources of a computer platform (10) according to one of the preceding claims, wherein said access requests emitted by the first partitions during their execution on the processor are sent to the partition for access to the shared resources by depositing them in a working memory (15) in which the partition for access to the shared resources reads them and according to which the responses to said requests are deposited in said memory by the partition for access to the shared resources,
and according to which the accesses to a first, respectively second, shared resource being executed during a predetermined time by a first, respectively second, of the reserved cores, the reading in the working memory of the access requests to the first, second, resource or the depositing in the working memory of the responses to said requests having to be done by said first, respectively reserved core during said predetermined time; and according to which
based on at least the activity of the second of the reserved cores, the allocation to said second core is triggered, during said predetermined time, by at least part of the reading in the working memory of the requests to access the first resource or by the depositing in the working memory of the responses to said requests.

6. A computer program including software instructions which, when executed by a computer, carry out a method according to one of claims 1 to 5.

7. A computer platform (10) including:
- at least one multicore processor (21) including at least two cores (22);
- a set of application partitions (14) executable on the processor;
- a set (19) of resources (18) shared between said application partitions;
wherein the set of application partitions includes first partitions generating requests to access at least one shared resource of the set of shared resources, transmitting digital data to be written in said shared resources or querying said shared resource;
including a sequential list (27) of allocations organizing the use of the cores by the application partitions beforehand, the allocations indicating, in correspondence with the cores, predetermined partitions and times,
said platform being suitable for using each core is selectively during a predetermined time indicated in an allocation of the list for the execution of an application partition indicated in correspondence with the core in the allocation,
said platform being suitable for triggering a switching of the selective use of the core, at the end of said predetermined time, toward the execution of the partition indicated in correspondence with said core in the following allocation of the sequential list of allocations during the predetermined time indicated in correspondence with said core in said following allocation;
said platform being **characterized in that** the set of application partitions (14) includes at least one second partition, called partition for access to the shared resources, said access requests emitted by the first partitions during their execution on the processor being sent to the partition for access to the shared resources;
- the partition for access to the shared resources able, when it is executed on the processor, to carry out the access to the shared resources in order to implement the access requests to the shared resources;
- said platform being able to reserve, in order to execute the partition for access to the shared resources, multiple cores (22) synchronously over predetermined times via respective allocations in the sequential list of allocations, and to respect the following conditions during each of the predetermined times allocated to said partition:
- the separate accesses to shared resources (18) done by the partition for access to the shared resources of the set are done by separate reserved cores; and
- for each shared resource of the set, all of the accesses to the shared resource done by the partition for access to the shared resources are executed, during said predetermined time, by a single core among the reserved cores,
and wherein it is predefined for each first partition (14) relative to each shared resource (18), a respective frequency, the partition for access to the shared resources (14), during each of its predetermined execution times, accesses said shared resource (18) at said frequency in order to collect data provided by said shared resource in response to an access request emitted by said first partition and implemented by the partition for access to the shared resources.

8. The computer platform (10) according to claim 7, wherein the partition for access to the shared resources (14) is suitable for transmitting the responses provided by the shared resources to the requests, to the first partitions.

9. The computer platform according to claim 7 or 8, wherein the shared resources of the set of shared resources are input and/or output peripherals (18) of the computer platform.
